**Europäisches Patentamt**

**European Patent Office**

**Office européen des brevets**

(11) Veröffentlichungsnummer: **0 051 743**
**A1**

# EUROPÄISCHE PATENTANMELDUNG

(21) Anmeldenummer: 81107905.2

(22) Anmeldetag: 05.10.81

(51) Int. Cl.³: **C 08 G 65/44**

(30) Priorität: 08.11.80 DE 3042149

(43) Veröffentlichungstag der Anmeldung: **19.05.82**
**Patentblatt 82/20**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Naarmann, Herbert, Dr., Haardtblick 15,**
**D-6719 Wattenheim (DE)**
Erfinder: **Brandstetter, Franz, Dr., Ritterbuechel 45,**
**D-6730 Neustadt (DE)**
Erfinder: **Schuster, Hans H., Dr., Luitpoldstrasse 166,**
**D-6700 Ludwigshafen (DE)**

(54) Verfahren zur Herstellung von Polyphenylenäthern.

(57) Ein Verfahren zur Herstellung hochmolekularer Polyphenylenäther aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 25 °C in Anwesenheit eines Katalysatorkomplexes aus einem Kupfersalz und einem organischen Amin in Gegenwart eines Lösungsmittels im Bereich von 1:1 bis 20:2 Gewichtsteilen, wobei der Katalysator als Zulauf zu vorgelegten Monomeren eindosiert wird. Vorteilhaft ist das Lösungsmittel Ethylbenzol und wird im Bereich von 1:1 bis 10:1 Gewichtsteilen verwendet, und der Katalysator ist Kupferbromid, und als Amin wird ei primäres und/oder sekundäres Amin, wie Oktylamin, Dibutylamin oder 1,4-Dimethylpentylamin verwendet.

## Verfahren zur Herstellung von Polyphenylenäthern

Die Erfindung betrifft ein Verfahren zur Herstellung hochmolekularer Polyphenylenäthern aus einwertigen Phenolen, die in den beiden ortho-Stellungen oder zusätzlich in einer meta-Position, nicht aber in der para-Stellung Alkylsubstituenten aufweisen durch oxidative Kupplungsreaktion mit Sauerstoff bei Temperaturen zwischen 10 und 25°C, vorzugsweise 15 bis 20°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer-II-Salzen und einem geradkettigen aliphatischen Amin sowie einem niedermolekularen Alkylalkohol durchzuführen, wobei das Monomere gelöst zum Katalysator dosiert wird (vgl. US-PS 3 661 848 oder DE-AS 20 11 709). Nach Beendigung der Reaktion wird die das Polymere enthaltende Aromatenlösung mit etwa der 10-fachen Menge Methanol versetzt, das ausgefällte Polymere abfiltriert, mit Methanol gewaschen und bei 70°C im Vakuum getrocknet.

Dieser bisher ausgeübte Reaktionsweg weist den Nachteil auf, daß nur mit Monomeren hoher Reinheit gearbeitet werden kann und beim technischen Prozeß aus Sicherheitsgründen im explosiven Gasbereich Sauerstoff/Lösungsmittel zu arbeiten ist.

Der Erfindung lag die Aufgabe zugrunde, bei Verwendung von Rohmonomeren durch Abändern der Polymerisationsbedingungen Polymere mit hohen Intrinsic-Viskositäten zu erhalten und im sicherheitstechnisch unbedenklichen Bereich unter Vermeidung von Sauerstoff/Lösungsmittelgemischen im Reaktionsgefäß zu arbeiten.

Diese Aufgabe wird erfindungsgemäß dadurch gelöst, daß der Katalysator als Zulauf zu vorgelegten Monomeren eindosiert wird.

Das Lösungsmittel ist bevorzugt Ethylbenzol und wird vorzugsweise im Bereich von 1:1 bis 10:1, bezogen auf das Monomer, Gewichtsteilen verwendet.

Vorzugsweise wird als Katalysator Kupferbromid, besonders bevorzugt Kupfer-I-bromid verwendet. Als Amin wird vorzugsweise ein primäres und/oder sekundäres Amin, besonders bevorzugt Oktylamin, Dibutylamin oder 1,4-Dimethyl-pentylamin, verwendet.

Unter hochmolekularen Polyphenylenäthern werden die durch oxidative Kupplung von 2,6-Dialkylphenolen zu einer Kette alkylsubstituierter, in para-Stellung durch Sauerstoffatome ätherartig gebundene Benzolringe verstanden. Die Polymeren weisen Molekulargewichte von 5 000 bis 30 000, bevorzugt 10 000 bis 25 000, bestimmt nach der in "Macromolecular Syntheses" 1 (1978), Seite 83 beschriebenen Methode, auf. Hochmolekulare Polyphenylenäther, auch Poly(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

0051743

Die zur Herstellung der hochmolekularen Polyphenylenäther verwendeten einwertigen Phenole, die in den beiden ortho--Stellungen, nicht aber in der para-Stellung Alkylsubstituenten aufweisen, sind übliche Phenole wie 2,6-Dimethylphenol, 2,6-Diäthylphenol, 2-Methyl-6-äthylphenyl, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 15 bis 35, vorzugsweise 18 bis $22^{\circ}C$ warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist.

Bei dem für die Polykondensation bekannten Katalysatorkomplex handelt es sich um eine Kombination aus einem organischen Amin, z.B. Diäthylamin, Picolin, Chinolin, Pyridinbasen, Triisopropylamin, Dimethylisopropanolamin, Triäthanolamin, Triisopropanolamin oder Diisopropanolamin mit vorzugsweise Dibutylamin, Oktylamin und/oder 1,4-Dimethylpentylamin, einem Kupfersalz, wie Kupfer-I-Chlorid, Kupfer-I-Jodid, Kupfer-II-Acetat, Kupfer-II-Propionat, Kupfer-II-Acetessigester oder Kupfer-II-Acetylacetonat, vorzugsweise Kupfer-I-bromid. Ein bevorzugter Bereich bei der Menge der eingesetzten Amine liegt von 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

0051743

Der Anteil des Lösungsmittels liegt üblicherweise im Bereich von 1:1 bis 20:1, d.h. maximal bis zu einem Überschuß des 20-fachen am Lösungsmittel, bezogen auf das Monomere.

Darüber hinaus kann die Katalysatormischung einen Aktivator wie ein Diarylguanidin oder ein Diarylformamidin oder andere Hilfsstoffe, wie Phenole oder Phenolderivate als Lösungsmittel enthalten.

Nach erfindungsgemäßem Verfahren soll als Lösungsmittel ein aromatischer $C_8$- bis $C_{10}$-Kohlenwasserstoff verwendet werden; geeignete Kohlenwasserstoffe sind insbesondere Ethylbenzol, Xylol, Diethylbenzol oder deren Gemische, wobei vorzugsweise Ethylbenzol verwendet wird, die Lösungsmittel werden bevorzugt im Bereich von 1:1 bis 10:1 Gewichtsteilen, bezogen auf das monomere Phenol, eingesetzt, wobei das Lösungsmittel in das Monomere als Vorlage praktisch als Kesselfüllung vorgelegt werden und die Katalysatormischung eindosiert wird.

Die mit der Erfindung erzielten Vorteile bestehen insbesondere darin, daß man ein Polymerisat mit hoher Intrinsic--Viskosität bei Verwendung von Rohmonomeren erhält. Bei dieser Polymerisationstechnik wird außerdem das Polymere in Ausbeuten von größer als 90 Gewichtsprozent, bezogen auf das eingesetzte Monomer, erhalten, außerdem gelingt ein deutliches Absenken der Katalysatorkonzentrationen an Kupfersalz wie auch an Amin. Entscheidend ist vor allem die sichere Fahrweise unter Vermeidung von Gasraum im Reaktionsgefäß.

In den Beispielen wird gezeigt, daß neben dem erfindungsgemäßen Vorteil der höheren Intinsic-Viskosität des Polymeren auch den Vorteil der kürzeren Polymerisationszeit,

sowie eine deutliche Absenkung von Katalysatorkomponenten erreicht wird.

Beispiel 1

Herstellung von Poly(2,6-dimethyl-1,4-phenylen)-äther

Eine Lösung von 1,3 g Cu-I-Bromid, 33 g Dibutylamin, 2 g 2,6-Dimethylphenol und bei 20°C in 10 Minuten unter Einleiten von Sauerstoff in eine Lösung von 204 g 2,6-Dimethylphenol in 1 400 ml Ethylbenzol eindosiert, anschließend wird noch 1 Stunde bei 20°C gerührt. Die Reaktion wird in Gegenwart von 30 Liter/Stunde Sauerstoff durchgeführt.

Nach Beendigung der Reaktion wird das Polymerisat mit 10 1 Methanol gefällt. Das erhaltene Polymerisat hat nach dem Trocknen eine Intrinsic Viskosität $[\eta]$ von 0,8 dl/g. Die Ausbeute an Polymeren lag bei >90 % (bezogen auf das eingesetzte Monomere). Analyse: Cu-Gehalt:<4 ppm; N-Gehalt: 0,1 Gew.%.

Beispiel 2

Wird wie im Beispiel 1 beschrieben gearbeitet, jedoch Art und Menge der Katalysatoren variiert, so werden die in der folgenden Tabelle wiedergegebenen Resultate erhalten.

O.Z. 0050/034747

- 6 -

| Beispiel Nr. | Cu-Salz g wasserfrei | | Lösungs-mittel | Amin Art und Menge in g | | dl/g [ ] |
|---|---|---|---|---|---|---|
| 2 | Cu-I-Br | 1,3 | Ethylbenzol | Oktylamin | 33 | 0,72 |
| 3 | Cu-I-Br | 1,2 | Xylol | Ethylhexylamin | 33 | 0,70 |
| 4 | Cu-I-Br | 1,1 | Xylol | Ethylhexylamin | 25 | 0,70 |
| 5 | Cu-I-Br | 1,0 | Xylol | Ethylhexylamin | 25 | 0,69 |
| 6 | Cu-I-Br | 0,9 | Xylol | Ethylhexylamin | 33 | 0,67 |
| 7 | Cu-I-Cl | 1,3 | Ethylbenzol | Dibutylamin | 27 | 0,73 |
| 8 | Cu-I-J | 1,3 | Ethylbenzol | Dibutylamin | 25 | 0,65 |
| 9 | Cu-I-Br | 0,8 | Ethylbenzol | Dibutylamin | 21 | 0,63 |
| 10 | Cu-I-Br | 1,3 | Ethylbenzol | Dibutylamin | 19 | 0,66 |
| 11 | Cu-I-Br | 1,0 | Ethylbenzol | Dibutylamin | 13 | 0,55 |
| 12 | Cu-II-Br (wasserhaltig) | 1,3 | Ethylbenzol | Dibutylamin | 30 | 0,15 |
| 13 | Cu-II-Azetat | 1,5 | Ethylbenzol | Picolin | 30 | 0,55 |
| 14 | Cu-II-Propionat | 1,5 | Ethylbenzol | Picolin | 30 | 0,55 |
| 15 | Cu-I-Acet-essigester | 1,5 | Ethylbenzol | Picolin | 20 | 0,66 |
| 16 | Cu-II-Acetyl-acetonat | 1,5 | Ethylbenzol | Picolin | 25 | 0,68 |
| 17 | Cu-I-Br | 1,3 | Ethylbenzol | Dibutylamin | 30 | 0,70 |
| 18 | Cu-I-Br | 1,3 | Xylol | Dibutylamin | 25 | 0,67 |
| 19 | Cu-I-Br | 0,8 | Toluol | Dibutylamin | 15 | 0,52 |
| 20 | Cu-I-Br | 0,9 | Toluol | Dibutylamin | 12 | 0,43 |
| 21 | Cu-I-Br | 0,7 | Toluol | Dibutylamin | 11 | 0,35 |

0051743

Bei allen Versuchen betrug die Gesamtreaktionszeit 1 1/2 Stunden, beim Versuch 6 dagegen nur 1 Stunde.

0051743

## Patentansprüche

1. Verfahren zur Herstellung hochmolekularer Polyphenylenäther aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 25°C, vorzugsweise zwischen 15 und 20°C, in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol, und gegebenenfalls eines Aktivators, dadurch gekennzeichnet, daß der Katalysator als Zulauf zu vorgelegten Monomeren eindosiert wird.

2. Verfahren nach Anspruch 1, dadurch gekennzeichnet, daß das Lösungsmittel Ethylbenzol ist.

3. Verfahren nach Anspruch 1, dadurch gekennzeichnet, daß das Lösungsmittel im Bereich von 1:1 bis 10:1, bezogen auf das Monomer, Gewichtsteilen verwendet wird.

4. Verfahren nach Anspruch 1, dadurch gekennzeichnet, daß als Katalysator Kupferbromid, vorzugsweise Kupfer-I-bromid verwendet wird.

5. Verfahren nach Anspruch 1, dadurch gekennzeichnet, daß als Amin ein primäres und/oder sekundäres Amin, vorzugsweise Oktylamin, Dibutylamin oder 1,4-Dimethylpentylamin verwendet wird.

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - B - 2 160 419 (MITSUBISHI GAS CHEMICAL CO., INC.) <br> * Spalte 2, Seiten 64 bis 66; Beispiele 12 bis 23 * <br> -- | | C 08 G 65/44 |
| A | DE - A1 - 2 460 326 (GENERAL ELECTRIC CO.) <br> * Seite 5, Zeile 6 * <br> -- | | |
| A | B. VOLLMERT "Grundriss der Makromolekularen Chemie" <br> 1962, SPRINGER-VERLAG, Berlin-Göttingen-Heidelberg <br> * Seite 71, Abb. 71 * <br> ---- | | **RECHERCHIERTE SACHGEBIETE (Int. Cl.³)** <br><br> C 08 G 65/44 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-11-1981 | WIBMER |

EPA form 1503.1 08.78